# EUROPÄISCHE PATENTANMELDUNG

(11) **EP 4 797 878 A1**
(43) Veröffentlichungstag der Anmeldung: **26.08.2026**
(21) Anmeldenummer: 26158920.4
(22) Anmeldetag: 17.02.2026
(51) Int. Cl.: H05B 45/54, H05B 47/23

(54) **STROMSENKE MIT PARALLELLAST FÜR EINE LED-KETTE**

(30) Priorität: 24.02.2025 DE 102025106825
(71) Anmelder: Diehl Aerospace GmbH, 88662 Überlingen (DE)
(72) Erfinder: Nieberlein, Uwe, 91154 Roth (DE); Köninger, Günther, 90616 Neuhof (DE)
(74) Vertreter: Diehl Patentabteilung

(57) **Zusammenfassung**

Eine Stromsenke (22) enthält zwei Versorgungspole (28a,b) für eine Dauergleichspannung (UG) und einen diese verbindenden Strompfad (30), der im Betrieb (B) von einem Gesamtstrom (IG) durchflossen ist, wobei in Reihenschaltung in dem Strompfad (30) angeordnet sind: ein Anschluss (32) für die LED-Kette (20) und ein steuerbares Widerstandselement (42) mit einer Parallelschaltung aus Lastpfaden (46a-d) mit je einer Reihenschaltung eines Lastwiderstandes (44a-d) und eines Schalters (44a-d), und eine Steuereinheit (60), um in Abhängigkeit der Messspannung (UM) die Schalter (44a-d) so anzusteuern, dass sich ein vorgebbarer Gesamtstrom (IG) und eine vorgebbare Elementspannung (UE) am Widerstandselement (42) im Strompfad (30) einstellt.

Eine Lichtquelle (6) für ein Lichtgerät (4) eines Flugzeuges (2) enthält die Stromsenke (22) und die an dem Anschluss (32) angeschlossene LED-Kette (20).

Ein Lichtgerät (4) für ein Flugzeug (2) enthält mindestens eine Lichtquelle (6a-c).

## Beschreibung

Die Erfindung betrifft eine Stromsenke für eine LED-Kette, also eine Reihenschaltung mehrerer LEDs (Leuchtdiode). Eine derartige Stromsenke dient dazu, einen gewünschten Strom durch die LED-Kette und damit die LEDs einzustellen, wobei die bei gleichem Strom an der LED-Kette abfallende Spannung z.B. fertigungsbedingt von LED-Kette zu LED-Kette stark schwanken kann.

Aus der DE 10 2012 107 882 A1 ist eine Schaltung bekannt zum Ansteuern einer Vielzahl von in Serie geschalteter LEDs (LED-Kette). Gemäß einem Beispiel umfasst die Schaltung einen als Stromquelle betreibbaren Schaltwandler, der mit der Vielzahl von LEDs verbunden ist, um diesen einen konstanten Laststrom zuzuführen. Der Schaltwandler umfasst eine Induktivität, die derart mit der Vielzahl von LEDs in Serie geschaltet ist, dass durch die Induktivität und die Vielzahl von LEDs der gleiche Laststrom fließt. Zwischen die Induktivität und der Vielzahl von LEDs ist kein Kondensator gekoppelt. Eine potentialfreie Treiberschaltung ist parallel zu jeder einzelnen LED (aus der Vielzahl von LEDs) geschaltet. Die potentialfreie Treiberschaltung ist dazu ausgebildet, zur Steuerung der Intensität des von der jeweiligen LED imitierten Lichts nach Maßgabe eines zugehörigen modulierten Eingangssignals deren Laststrom ganz oder zumindest teilweise zu übernehmen, wodurch ein Bypass an die jeweilige LED gebildet wird.

Aufgabe der vorliegenden Erfindung ist es, Verbesserungen im Hinblick auf eine Stromsenke für eine LED-Kette vorzuschlagen.

Die Aufgabe wird gelöst durch eine Stromsenke gemäß Patentanspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Die Stromsenke ist eine solche für eine LED Kette. Eine solche LED Kette ist ein Zweipol und sie enthält in einem einzigen Zweig eine Reihenschaltung von mehreren LEDs. Im Betrieb wird bzw. ist die LED-Kette von einem Gesamtstrom durchströmt. Der selbe Gesamtstrom durchströmt also den Zweig und jede der LEDs. Bei gegebenem Gesamtstrom stellt sich - je nach Individuum der LED-Kette - eine Spannung ein, die über der gesamten Kette abfällt. Diese Spannung kann von Exemplar zu Exemplar solcher - auch gleicher - Ketten stark schwanken, z.B. zwischen 20V und 35V.

Die Stromsenke enthält einen oberen und einen unteren Versorgungspol. In einem bestimmungsgemäßen Betrieb der Stromsenke (mit angeschlossener LED-Kette) sind bzw. werden die Versorgungspole von einer Dauergleichspannung gespeist. "Dauergleichspannung" bedeutet, dass auch bei einem PWM-Betrieb (Pulsweitenmodulation) der LED-Kette dauerhaft eine (insbesondere konstante) Gleichspannung anliegt, die Dauergleichspannung also nicht im Sinne einer PWM geschaltet ist.

Die Stromsenke enthält einen einzigen Strompfad. Der Strompfad verbindet die beiden Versorgungspole. Im Betrieb ist der Strompfad von dem oben genannten Gesamtstrom durchflossen. Der Gesamtstrom kann dabei verschiedene Werte annehmen, auch Null sein, ist also insbesondere zeitvariabel und ist bestimmungsgemäß von der Dauergleichspannung verursacht, welche an der Stromsenke mit angeschlossener LED-Kette anliegt. Der Gesamtstrom kann auch in einem PWM-Takt geschaltet sein (siehe unten).

In dem Strompfad sind in Reihenschaltung folgende Elemente angeordnet, die allesamt Bestandteile der Stromsenke sind:
- ein zweipoliger Anschluss für die LED-Kette,
- ein steuerbares Widerstandselement.

Diese werden im Folgenden genauer erläutert. Beide Element der Reihenschaltung (und die LED-Kette, siehe unten) sind also im Betrieb stets aktuell von dem selben Gesamtstrom durchflossen. Optional (siehe unten) ist noch ein Shuntwiderstand als drittes Element der Reihenschaltung vorhanden.

Der zweipolige Anschluss dient dazu, dass eine bzw. die LED-Kette an die Stromsenke angeschlossen werden kann. Hierzu wird die LED-Kette in die Reihenschaltung eingeschaltet bzw. wird Teil der Reihenschaltung. Mit anderen Worten ist die Reihenschaltung zwischen den beiden Versorgungspolen an der Stelle des Anschlusses aufgetrennt und dort die LED Kette einsetzbar bzw. eingesetzt. Die LED-Kette ist damit Teil des Strompfades und vom selben Gesamtstrom durchströmt.

Obschon die Erfindung hier auf eine LED-Kette gerichtet ist, kann die Stromsenke auch zum Betrieb anderer elektrischer Verbraucher genutzt werden. Mit anderen Worten kann ein beliebiger Verbraucher in Form eines Zweipols, der mit Hilfe einer Stromsenke von einem Strom durchflossen werden soll, an den Anschluss angeschlossen werden.

Das steuerbare Widerstandselement enthält bzw. ist eine Parallelschaltung aus wenigstens zwei oder mehreren, insbesondere vier, Lastpfaden. Jeder der Lastpfade enthält wiederum eine Reihenschaltung aus einem jeweiligen Lastwiderstand und einem Schalter. Im Betrieb ist die Parallelschaltung vom Gesamtstrom durchflossen. Dabei ist jeder der Lastpfade (wenn dessen Schalter geschlossen ist) von einem jeweiligen Laststrom durchflossen. Alle Lastströme aller Lastpfade addieren sich jeweils zum Gesamtstrom (wenn wenigstens einer der Lastpfade per geschlossenem Schalter Strom passieren lässt).

Der jeweilige Schalter dient bzw. ist eingerichtet zum Öffnen oder Schließen des jeweiligen Lastpfades. Mit anderen Worten kann durch Öffnen des Schalters der Lastpfad unterbrochen werden, sodass kein Stromfluss mehr durch den Lastpfad erfolgt. "Kein Stromfluss" ist hierbei so zu verstehen, dass dabei noch ein unwesentlicher Sperrstrom fließen kann, z.B. wenn es sich bei dem Schalter um einen elektronischen Schalter handelt. Ist der Schalter geschlossen, ist auch der Lastpfad durchverbunden, sodass der Laststrom durch den Lastpfad fließen kann bzw. fließt. An dem Schalter fällt dann insbesondere keine oder nur eine vernachlässigbare Spannung ab. Durch den Stromfluss im Lastpfad wird der betreffende Lastwiderstand sozusagen in der Stromsenke "wirksam" geschaltet.

Durch das Schließen verschiedener Kombination der Schalter lassen sich so verschiedene Gesamtwiderstände am Widerstandselement als Verschaltung der jeweiligen Lastwiderstände erreichen. So ist es möglich, durch Einstellung des Gesamtwiderstandes die über dem Widerstandselement abfallende Spannung in der Reihenschaltung zu steuern. So können insbesondere die Spannungsverhältnisse in der Reihenschaltung an die Strom-Spannungs-Anforderungen der LED-Kette angepasst werden. Dies insbesondere unabhängig vom gewünschten Gesamtstrom.

Die Elemente der Stromsenke in Reihenschaltung sind damit vollständig aufgezählt.

Die Stromsenke enthält (als separates bzw. drittes Element der Reihenschaltung oder als Teil des Widerstandselements, siehe unten) noch einen Messwiderstand. Durch den Messwiderstand ist bzw. wird der aktuell den Strompfad durchfließende Strom, also der Gesamtstrom, auf eine aktuelle Messspannung abgebildet. Durch Auswertung der aktuellen Messspannung kann also auf den aktuellen Gesamtstrom geschlossen werden.

Die Stromsenke enthält weiterhin eine (also nicht zur Reihenschaltung gehörende) Steuereinheit. Diese ist an allen Schaltern angeschlossen und dazu eingerichtet, in Abhängigkeit der Messspannung die Schalter so anzusteuern, dass sich - bei wenigstens einem geschlossenen Schalter - ein vorgebbarer Gesamtstrom und eine vorgebbare, über dem Widerstandselement abfallende Elementspannung im Strompfad einstellt. Damit ist folgendes möglich: Bei gegebener Dauergleichspannung bzw. an den Versorgungspolen anliegender Spannung können die Lastströme und damit die am Widerstandselement abfallende Elementspannung auf einem Wunschmaß gehalten werden, dabei jedoch der Gesamtstrom variiert werden, indem der Strom über einen Messwiderstand variierender Größe geleitet wird.

Überlegung dabei ist, dass insbesondere bei einer LED-Kette deren Spannungsabfall bei einem Gesamtstrom selber Größe von Exemplar zu Exemplar stark schwanken kann. Daher ist in der Reihenschaltung bei selber Größe der Dauergleichspannung die über dem Widerstandselement abfallende Elementspannung anzupassen. Dies kann nur durch Einstellung des Gesamtwiderstandes des Widerstandselements erfolgen. Der Gesamtstrom kann dann durch die Steuerung der Schalter auf einen gewünschten Wert eingestellt werden.

Gemäß der Erfindung ergibt sich eine vereinfachte Widerstands-LED-Ansteuerung für den Betrieb in LED-Lichtgeräten mit Schaltern.

Es wird eine LED Ansteuerung geschaffen, mit deren Hilfe es möglich ist, LEDs trotz einfachem Aufbau schnell zu schalten und die nicht mehr auf die Charaktereigenschaften von Regeldioden und Transistoren angewiesen / abhängig ist, die in fachüblichen Schaltungen verwendet werden.

In einer bevorzugten Ausführungsform sind in Bezug auf die Lastpfade die Größen der Lastwiderstände gemäß eine Binärfolge zueinander gewählt. Bei eine Anzahl von N Lastpfaden beträgt die Größe des Lastwiderstandes in einem ersten Lastpfad also R0. Im zweiten Lastpfad beträgt die Größe des Lastwiderstandes 1/2 R0, im dritten Lastpfad 1/4 R0, im vierten Lastpfad 1/8 R0 usw. So lassen sich durch Schließen der Schalter nach Art von Binärcodes eine entsprechende Anzahl von Gesamtwiderstandswerten / Gesamtwiderständen im Widerstandselement erzeugen.

In anderweitigen Ausführungsformen können die Lastwiderstände (deren Werte) verschiedener Lastpfade auch anderweitig gestaffelt sein und/oder auch gleich sein.

In einer bevorzugten Ausführungsform ist der Messwiderstand ein Shuntwiderstand, der ein zusätzliches (drittes) Element der Reihenschaltung der Stromsenke ist. Der Shuntwiderstand ist dann jederzeit vom Gesamtstrom (der auch Null werden kann) durch den Strompfad durchflossen. So ist eine Spanungs- / bzw. Strommessung zur Ermittlung des Gesamtstromes besonders einfach möglich.

In einer bevorzugten Variante dieser Ausführungsform ist der Shuntwiderstand als erstes Element an dem unteren Versorgungspol angeordnet ist. Mit anderen Worten ist der Shuntwiderstand dasjenige Element, welches im Strompfad dem unteren Versorgungspol am nächsten angeordnet ist. Insbesondere für den Fall, dass der untere Versorgungspol ein Massepol ist, ist der Shuntwiderstand damit mit seinem einen Pol an Masse geschaltet und kann so besonders einfach und kostengünstig ausgeführt werden.

In einer alternativen bevorzugten Ausführungsform ist der Messwiderstand durch je einen Teilmesswiderstand pro Lastpfad gebildet. Jeder der Teilmesswiderstände ist zumindest ein Teil des jeweiligen Lastwiderstandes oder ist identisch zu dem Lastwiderstand. So wird kein zusätzliches Element benötigt, um den Messwiderstand zu bilden.

In einer bevorzugten Ausführungsform ist innerhalb wenigstens eines der Lastpfade der Schalter als erstes Element der Reihenschaltung (innerhalb des Widerstandselements) dem unteren Versorgungspol zugewandt angeordnet. Mit anderen Worten ist der Schalter dasjenige Element der Reihenschaltung, welches im Lastpfad dem unteren Versorgungspol am nächsten angeordnet ist. Insbesondere für den Fall, dass der untere Versorgungspol ein Massepol ist und kein separater Messwiderstand vorhanden ist, ist der Schalter damit mit seinem einen Pol an Masse geschaltet und kann so besonders einfach und kostengünstig ausgeführt werden.

In einer bevorzugten Ausführungsform ist der Anschluss für die LED Kette in dem Strompfad als erstes Element der Reihenschaltung an dem oberen Versorgungspol angeordnet. Mit anderen Worten ist der Anschluss, und damit z.B. eine LED-Kette als Verbraucher, dasjenige Element der Reihenschaltung, welches im Strompfad dem oberen Versorgungspol am nächsten angeordnet ist. Für den Fall, dass an dem oberen Versorgungspol ein höheres elektrisches Potenzial (insbesondere positives Betriebspotential) als an dem unteren Versorgungspol (insbesondere Masse) anliegt, ist nur der Verbraucher, z.B. die LED-Kette, dem höchsten Potenzial ausgesetzt. Sämtliche restlichen Elemente der Reihenschaltung sind niedrigeren Potenzialen bzw. Masse ausgesetzt. Die Elemente der Stromsenke werden somit geschont.

In einer bevorzugten Ausführungsform ist jeder der Schalter ein PWM-Schalter für einen PWM-Betrieb der LED Kette. Mit anderen Worten ist es in dieser Ausführungsform vorgesehen, die LED Kette in einem PWM-Betrieb anzusteuern, wobei der PWM-Betrieb insbesondere ausschließlich über die PWM-Schalter erfolgt, wenn nämlich bestimmungsgemäß die (nicht per PWM geschaltete) Dauergleichspannung zwischen den Versorgungspolen anliegt. Somit ist es vermieden, die gesamte Stromsenke einer wechselnden Versorgungsspannung zu unterwerfen. Die Stromsenke kann tatsächlich (im Sinne der PWM dauerhaft) über die Dauergleichspannung versorgt sein, was die Ansteuerung der Stromsenke bzw. Stromsenke mit angeschlossener LED-Kette vereinfacht.

Die Aufgabe der Erfindung wird auch gelöst durch eine Lichtquelle gemäß Patentanspruch 9. Die Lichtquelle ist eine solche für ein Lichtgerät eines Flugzeuges. Die Lichtquelle enthält die erfindungsgemäße Stromsenke. Die Lichtquelle enthält außerdem die oben genannte LED-Kette. Die LED Kette enthält eine Mehrzahl von in Reihe geschalteten LEDs. Die LED-Kette ist in der Lichtquelle zwischen den beiden Anschlusspolen des zweipoligen Anschlusses angeschlossen. Mit anderen Worten bildet in der Lichtquelle die LED Kette ein weiteres Element der Reihenschaltung im Strompfad. Im Betrieb ist daher sowohl die LED-Kette sowie jede einzelne der LEDs von dem Gesamtstrom durchflossen, der die Stromsenke bzw. deren Strompfad durchfließt.

Die Lichtquelle und zumindest ein Teil deren möglicher Ausführungsformen sowie die jeweiligen Vorteile wurden sinngemäß bereits im Zusammenhang mit der erfindungsgemäßen Stromsenke erläutert. Insbesondere bilden also die oben im Zusammenhang mit der Stromsenke genannten bevorzugten Ausführungsformen auch bevorzugte Ausführungsformen der Lichtquelle.

Die Aufgabe der Erfindung wird auch gelöst durch ein Lichtgerät gemäß Patentanspruch 10. Das Lichtgerät ist ein solches eines Flugzeuges bzw. für ein Flugzeug wie es oben bereits erläutert wurde. Das Lichtgerät enthält mindestens eine der erfindungsgemäßen Lichtquellen.

Das Lichtgerät und zumindest ein Teil deren möglicher Ausführungsformen sowie die jeweiligen Vorteile wurden sinngemäß bereits im Zusammenhang mit der erfindungsgemäßen Stromsenke und Lichtquelle erläutert. Insbesondere bilden also die oben im Zusammenhang mit der Stromsenke und Lichtquelle genannten bevorzugten Ausführungsformen auch bevorzugte Ausführungsformen des Lichtgerätes.

Insbesondere enthält das Lichtgerät mehrere erfindungsgemäße Lichtquellen. Zum Beispiel kann so ein Mehrfarb-Lichtgerät realisiert werden, welches als erste Lichtquelle eine solche mit einer weißen LED-Kette (LEDs erzeugen weißes Licht), eine zweite Lichtquelle mit roten LEDs, eine dritte Lichtquelle mit grünen LEDs und eine vierte Lichtquelle mit blauen LEDs enthält.

Das Lichtgerät enthält insbesondere mindestens zwei der erfindungsgemäßen Lichtquellen. Das Lichtgerät enthält insbesondere außerdem eine Gesamtsteuerung für das Lichtgerät. Die Steuereinheit mindestens einer der erfindungsgemäßen Lichtquellen, insbesondere mehrerer oder aller der erfindungsgemäßen Lichtquellen kann dann als zumindest Teil der Gesamtsteuerung ausgeführt sein. Mit anderen Worten kann eine einzige Gesamtsteuerung die Ansteuerung mindestens einer, insbesondere mehrerer oder aller Steuereinheiten der erfindungsgemäßen Lichtquellen übernehmen, was die Gesamtanordnung vereinfacht.

Das Lichtgerät kann ein PWM-Element enthalten. Dieses dient bzw. ist eingerichtet zur Ansteuerung wenigstens einer, insbesondere mehrerer oder aller der erfindungsgemäßen Lichtquellen mit einem jeweiligen PWM-Signal. Das PWM-Element ist hierzu mit den Schaltern der jeweiligen Lichtquelle verbunden, weshalb die jeweilige Lichtquelle dann die oben erläuterte Ausführungsform aufweist, dass deren Schalter PWM-Schalter sind. Das PWM-Element ist dazu eingerichtet, die jeweiligen Schalter mit dem jeweiligen PWM-Signal anzusteuern. Somit können im Lichtgerät wenigstens eine, insbesondere mehrere oder alle der erfindungsgemäßen Lichtquellen besonders einfach durch ein zentrales PWM-Element angesteuert werden. Insbesondere ist das PWM-Element ebenfalls als wenigstens Teil der Gesamtsteuerung des Lichtgerätes ausgeführt.

In einer bevorzugten Ausführungsform enthält das Lichtgerät ein Versorgungsmodul. Das Versorgungsmodul dient bzw. ist eingerichtet zur Versorgung der Versorgungspole wenigstens einer, insbesondere mehrerer, insbesondere aller der erfindungsgemäßen Lichtquellen mit einer jeweiligen Dauergleichspannung. Somit können die Lichtquellen besonders einfach mit Energie versorgt werden.

In einer bevorzugten Variante dieser Ausführungsform ist das Versorgungsmodul dazu eingerichtet, die Größe der jeweiligen Dauergleichspannung für eine jeweilige erfindungsgemäße Lichtquelle in Abhängigkeit der Größe der über dem Widerstandselement abfallenden Spannung in der jeweiligen Lichtquelle zu wählen oder zu ändern. Insbesondere ist es so möglich, die Dauergleichspannung auf ein minimal nötiges Maß abzusenken, sodass eine möglichst kleine oder gar keine Spannung über dem Widerstandselement abfällt. Somit wird der Stromverbrauch und die Wärmeentwicklung der jeweiligen Lichtquelle bzw. Stromsenke reduziert.

Die Aufgabe der Erfindung wird auch gelöst durch ein Verfahren gemäß Patentanspruch 13. Das Verfahren dient bzw. ist eingerichtet zum Herstellen der erfindungsgemäßen Lichtquelle. Bei dem Verfahren wird die LED-Kette. Anschließend wird wenigstens einer der Lastwiderstände abhängig von einer elektrischen Eigenschaft der LED-Kette gewählt. Die Stromquelle wird dann mit diesem / diesen Lastwiderständen bereitgestellt. Die bereitgestellte LED-Kette wird dann an den Anschluss der bereitgestellten Stromsenke angeschlossen. Mit anderen Worten werden die die Lastwiderstände in einem bestimmten Individuum der Lichtquelle abhängig von den Eigenschaften der aktuell dort eingesetzten individuellen LED-Kette gewählt bzw. die Lastwiderstände individuell auf die individuell genutzte LED-Kette abgestimmt. So entsteht eine Lichtquelle, die besonders günstige elektrische Eigenschaften als Gesamtsystem aufweist, z.B. einen jeweils auf ein mögliches Minimum reduzierten Energieverbrauch / Wärmeentwicklung usw.

In einer bevorzugten Ausführungsform wird eine Auswahl von wenigstens zwei Sätzen von Lastwiderständen bereitgestellt. Jeder der Sätze stellt wenigsten einen Teil der Lastwiderstände wenigstens einer der Stromsenken dar. Wenigstens einer der Lastwiderstände wird im oben beschriebenen Verfahren dadurch gewählt, dass einer der Sätze für die Stromsenke ausgewählt wird und die Stromsenke mit diesem Satz der Lastwiderstände bestückt wird. Die Lastwiderstände des Satzes also als Lastwiderstände in der Stromsenke eingesetzt / verbaut werden. So können auf einfache Weise die Stromsenken an die jeweilige LED-Kette zumindest in einem gewissen Maße angepasst werden.

Die Erfindung beruht auf folgenden Erkenntnissen, Beobachtungen bzw. Überlegungen und weist noch die nachfolgenden bevorzugten Ausführungsformen auf. Diese Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Gemäß der Erfindung ergibt sich eine vereinfachte Widerstands-LED-Ansteuerung für den Betrieb in LED Lichtgeräten mit Schaltern. Es wird eine LED Ansteuerung dargestellt, mit deren Hilfe es möglich ist, LEDs trotz einfachem Aufbau schnell zu schalten und die nicht mehr auf die Charaktereigenschaften von Regeldioden und Transistoren angewiesen/abhängig ist.

Gemäß der Erfindung erfolgt eine Reduzierung der RC Kosten (wiederkehrende Kosten für jedes Gerät) der Stromsenken. Diese werden günstiger und schneller.

Die Erfindung beruht auf der Idee, dass bisherige Stromsenken in Hardware mit vielen teuren Bauteilen (z.B. Regeldioden) ausgeführt wurden. Die Hardware (Regeldiode) wird gemäß der Erfindung durch Steuerung / Software (Steuereinheit auf Basis von Spannungs-/Strommessung mit dem Messwiderstand).

Die Erfindung beruht auf folgender Erkenntnis: Um die LEDs einer LED-Kette in allen Betriebspunkten schnell schalten zu können und dabei über Temperatur und allen Toleranzen einen konstanten Strom in den LEDs gewährleisten zu können, wird in der Praxis eine Stromquelle mit parallelgeschalteten Transistoren, die geregelt werden, aufgebaut. Das ist aufwändig und kostet viel Geld, Bauteile, Stromzentrierung, Schwingunterdrückung, Regelkreis.

Im Rahmen dieser Erfindung wird daher eine LED Ansteuerung dargestellt, mit deren Hilfe es möglich ist, LEDs trotz einfachem Aufbau schnell zu schalten und die nicht mehr auf die Charaktereigenschaften der Von Regeldioden und Transistoren angewiesen / abhängig ist.

Wesentliche Vorteile sind:
- niedrigere Kosten
- Marktsicherung
- Pro 42inch Gerät mit 4inch Ansteuerung ca. 40 Einheiten.

Grundgedanken der Erfindung sind auch:
- optional eine einstellbare Voltage Source (Versorgungsmodul, Dauergleichspannung) zur Erhöhung des Wirkungsgrades,
- Wahl der Lastwiderstände in Abhängigkeit der Vorwärtsspannung der LEDs, des Binnings (Sortierung der LEDs) und des LED light output (LED Lichtleistung) und der notwendigen Abstufungen des Gesamtstromes, um gewünschte Helligkeitsstufen bei Betrieb der LEDs umsetzen zu können
- Doppelfunktion der Lastwiderstände als Last / Strombremse für den Gesamtstrom einerseits und Shuntwiderstand / Messwiderstand andererseits
- Spannungsmessung über den Lastwiderständen in Funktion als Shuntwiderständen liefert den Strom bei eingeschalteten LEDs (wenigstens einer der Schalter geschlossen) und liefert eine direkte Information für eine Spannungsanpassung der Dauergleichspannung im Versorgungsmodul
- Schalter als "low-R-switch"
- Schalter zur Einspeisung der LED-PWM.

Eine Idee der Erfindung ist folgende:
Es werden LEDs mit einem Vorwiderstand (Widerstandselement) betrieben. Der / Die Vorwiderstände werden entsprechend der Vorwärtsspannungs- und Helligkeitsbinnings der LEDs ausgewählt. Die Vorwärtsspannungen der LEDs können sehr stark streuen, teilweise bis zu 1V. Dagegen liegt der Wärmegang der LEDs bei ca. 0,1V pro LED im Bereich zwischen -15°C und 85°C. Mit einem niederohmigen günstigen Schalter z.B. einem Mosfet, der sehr klein und günstig sein kann, z.B. 5ct da er keine Verlustleistung abführen muss, wird die LED (vermittels der Schalter) nach Art einer PWM geschaltet. Im An-Zustand (wenigstens ein Schalter geschlossen) kann an den Widerständen (Lastwiderstand), die sowohl Strombegrenzungswiderstand als auch Stromshunt (Messwiderstand) sind, eine Spannung gemessen werden, die dem aktuellen Strom (Gesamtstrom) entspricht. Durch die Steuereinheit kann jetzt eine Lichtkorrektur durch Nachführen des LED PWM Cycles erfolgen. Werden mehr als ein Schalter installiert (mindestens zwei Lastpfade), kann durch Schalten verschiedener Kombinationen (der Schalter) und einer geschickten Wahl der (Last-)Widerstände der Strom nahezu konstant gehalten werden. Je nach vorgehaltenem Spannungsabfall über den Widerständen z.B. 2.5V wird eine Stromveränderung in den LEDs vom Faktor 1.5 über dem Temperaturbereich angenommen. Werden die Lastwiderstände so gewählt, dass z.B. sich die Ströme jeweils um einen Faktor 1/2 unterscheiden (Binärfolge, siehe oben), so können mit vier vorhandenen Schaltstufen (Lastpfaden) die Stromschwankungen wahrscheinlich auf ca. 10% ausgesteuert werden.

Gleichzeitig kann über die Spannung an den (Last)Widerständen direkt gemessen werden, um wieviel die LED Versorgungsspannung (Dauergleichspannung) gegenüber der LED Kette zu hoch oder zu niedrig ist.

Es kann zusätzlich von der Steuereinheit optional eine Korrektur an die LED Spannungsquelle (der Dauergleichspannung) geschickt werden, um den groben Wärmegang des (Licht)Gerätes zu kompensieren. Dabei kann einerseits der Wärmedrift bereits größtenteils kompensiert werden und gleichzeitig der Wirkungsgrad des Gerätes optimiert werden.

Da die LEDs direkt mit schnellen Schaltern geschaltet werden, erfolgt eine sehr schnelle Stromeinregelung durch die LEDs. Die Einregelzeit wird nur noch durch den Switch (Schalter) bestimmt. Damit sind jetzt extrem schnelle Schaltzeiten möglich, die bisher aus der Praxis bekannte übertreffen können.

Die Hauptverlustleistung erfolgt in günstigen (Last)Widerständen, die einfach in Reihe geroutet werden können (wenigstens einer der Lastwiderstände kann eine Reihen- und / oder Parallelschaltung von Einzelwiderständen sein).

Weitere Merkmale, Wirkungen und Vorteile der Erfindung ergeben sich aus der nachfolgenden Beschreibung eines bevorzugten Ausführungsbeispiels der Erfindung sowie den beigefügten Figuren. Dabei zeigen, jeweils in einer schematischen Prinzipskizze:
- Figur 1: ein Flugzeug mit Lichtgerät, enthaltend eine Lichtquelle mit LED-Kette und Stromsenke,
- Figur 2: ein alternatives Lichtgerät mit drei Lichtquellen.

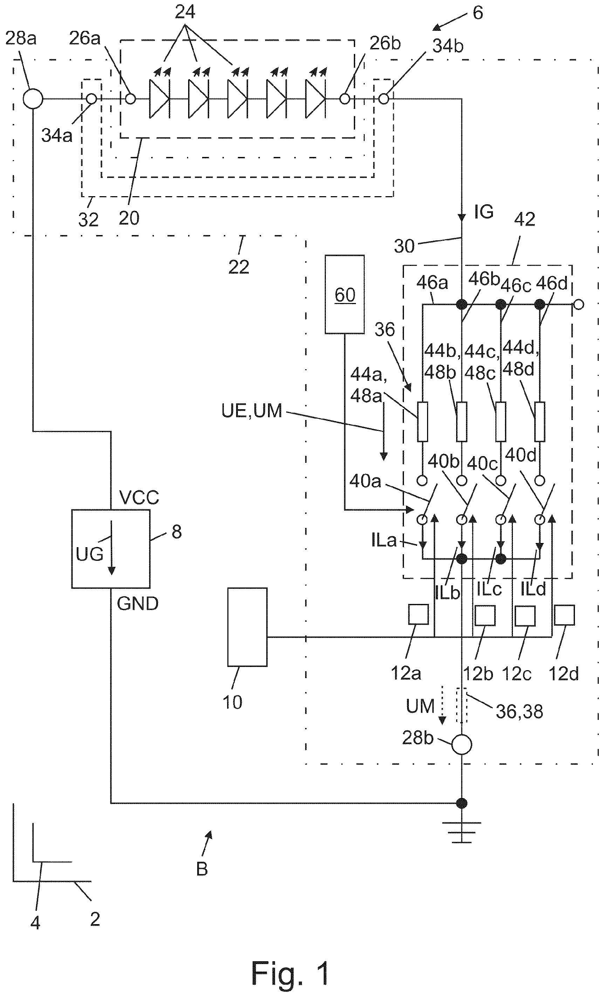

Figur 1 zeigt einen Ausschnitt aus einem nicht näher dargestellten Flugzeug 2. Das Flugzeug 2 enthält ein Lichtgerät 4 für das Flugzeug 2. Das Lichtgerät 4 enthält eine Lichtquelle 6 sowie eine Energiequelle 8 und ein PWM-Steuergerät 10.

Figur 1 zeigt das Lichtgerät 4 in einem bestimmungsgemäßen Betrieb B. In diesem erzeugt die Energiequelle 8 eine Dauergleichspannung UG zwischen einem Erdpotential GND und einem positiven Betriebspotential VCC. Das PWM-Steuergerät 10 erzeugt ein PWM-Signal 12.

Die Lichtquelle 6 enthält eine LED-Kette 20 sowie eine Stromsenke 22 für die LED-Kette 20 bzw. deren Betrieb B. Die LED-Kette 20 ist hier eine Reihenschaltung einer Mehrzahl von LEDs 24, von denen in Figur 1 der Übersichtlichkeit halber exemplarisch nur fünf Stück dargestellt sind. Die LED-Kette 20 weist daher zwei elektrische Kontakte 26a,b auf.

Die Stromsenke 22 für die LED-Kette 20 enthält einen oberen Versorgungspol 28a und einen unteren Versorgungspol 28b. In dem Betrieb B sind die beiden Versorgungspole 28a,b von der Dauergleichspannung UG gespeist, das heißt die Energiequelle 8 ist an den beiden Versorgungspolen 28a,b angeschlossen.

Die Stromsenke 22 enthält einen Strompfad 30, der die beiden Versorgungspole 28a,b miteinander verbindet. Im Betrieb B ist der Strompfad 30 von einem Gesamtstrom IG durchströmt, der von der Dauergleichspannung UG verursacht ist und zeitveränderlich ist. Der Gesamtstrom IG kann dabei auch Null werden, wenn alle Schalter 40a-d geöffnet sind, siehe unten.

In dem Strompfad 30 sind in Reihenschaltung folgende Komponenten angeordnet:

Dem oberen Versorgungspol 28a folgt ein zweipoliger Anschluss 32 der Stromsenke 22 mit zwei Anschlusspolen 34a,b. An diesen ist die LED-Kette 20 mit ihren Kontakten 26a,b angeschlossen. Die LED-Kette bildet damit ebenfalls ein Element der Reihenschaltung im Strompfad 30.

Die Stromsenke 22 bzw. deren Reihenschaltung enthält weiterhin ein steuerbares Widerstandselement 42. Dieses besteht aus einer Parallelschaltung von vier Lastpfaden 46a-d. Jeder der Lastpfade enthält eine Reihenschaltung aus einem jeweiligen Lastwiderstand 44a-d mit einem jeweiligen Schalter 40a-d.

Die Lastwiderstände 44a-d sind hier nach Art einer Binärfolge gestaffelt. Es gilt für deren Größen: Lastwiderstand 44a hat den Wert R0, 44b den Wert R0/2, 44c den Wert R0/4 und 44d den Wert R0/8.

Im Betrieb B ist das gesamte Widerstandselement 42 vom Gesamtstrom IG durchflossen. In jedem der Lastpfade 46a-d fließt ein Laststrom ILa-d. Alle Lastströme ILa-d summieren sich jederzeit zum Gesamtstrom IG. Durch die wahlweise Ansteuerung (Öffnen oder Schließen) der Schalter 40a-d kann die Größe des Widerstandes des Widerstandselements 42 geändert werden. Mit anderen Worten: je nach Ansteuerung der Schalter 40a-d kann - entsprechende Spannungs- / Stromverhältnisse vorausgesetzt - bei gegebenem Gesamtstromes IG die Größe der über dem Widerstandselement 42 abfallenden Elementspannung UE verändert werden.

Die Lastwiderstände 44a-d wirken hier auch als Messwiderstand 36. Dies ist dadurch erreicht, dass jeder der Lastwiderstände 44a-d als Teilmesswiderstand 48a-d fungiert. Der Messwiderstand 36 bildet den ihn und damit den Strompfad 30 aktuell durchfließenden Gesamtstrom IG auf die aktuelle Messspannung UM ab, die in diesem Fall dann mit der Elementspannung UE identisch ist. Damit ist die Messspannung UM und anhand dieser daher auch der aktuell im Strompfad 30 fließende Gesamtstrom IG bekannt. Denn jederzeit ist bekannt, welcher der Schalter 40a-d geschlossen ist, weshalb der Lastwiderstand 44a-d des betreffenden Lastpfades 46a-d zum Messwiderstand 36 beiträgt.

In einer alternativen, hier gestrichelt angedeuteten Variante ist der Messwiderstand 36 als Shuntwiderstand 38 als zusätzliches Element der Reihenschaltung ausgeführt. Dabei fällt an diesem die mit dem Gesamtstrom IG korrelierte Messspannung UM ab. Der Shuntwiderstand 38 ist in dem Strompfad (30) als erstes Element an dem unteren Versorgungspol (28b) angeordnet ist.

Die Schalter 40a-d dienen also zum Öffnen, d.h. Unterbrechen oder Schließen des Lastpfades 46a-d und damit auch des Strompfades 30. Im geöffneten Zustand aller Schalter 40a-d ist der Stromfluss unterbrochen, der Gesamtstrom IG also Null. Im geschlossenen Zustand fließt der Laststrom ILa-d durch den Schalter 40a-d, ohne dass über diesem (nennenswerte) Spannung abfällt.

Die Stromsenke 22 enthält außerdem eine Steuereinheit 60. Dies ist dazu eingerichtet, in Abhängigkeit der Messspannung UM die Schalter 40a-d so anzusteuern, dass sich bei geschlossenem Schalter 40 ein vorgebbarer Gesamtstrom IG und auch die gewünschte Elementspannung UE im Strompfad 30 einstellt.

Der Schalter 40 ist im jeweiligen Lastpfad 46a-d als erstes Element der Reihenschaltung dem unteren Versorgungspol 28b zugewandt. Der Anschluss 32 ist dagegen in dem Strompfad 30 als erstes Element der Reihenschaltung an dem oberen Versorgungspol 28a angeordnet.

Die Schalter 40a-d sind hier auch PWM-Schalter für einen PWM-Betrieb der LED-Kette 20. Im Betrieb B sind nämlich die Schalter 40a-d durch das PWM Steuergerät 10 mit PWM-Signalen 12a-d angesteuert, um den gesamten Strompfad 30 gemäß Pulsweitenmodulation zu öffnen und zu schließen und somit den Stromfluss des Gesamtstromes IG zu erlauben oder zu unterbrechen und damit die LED-Kette 20 bzw. deren LEDs 24 gemäß einer PWM ein- und auszuschalten.

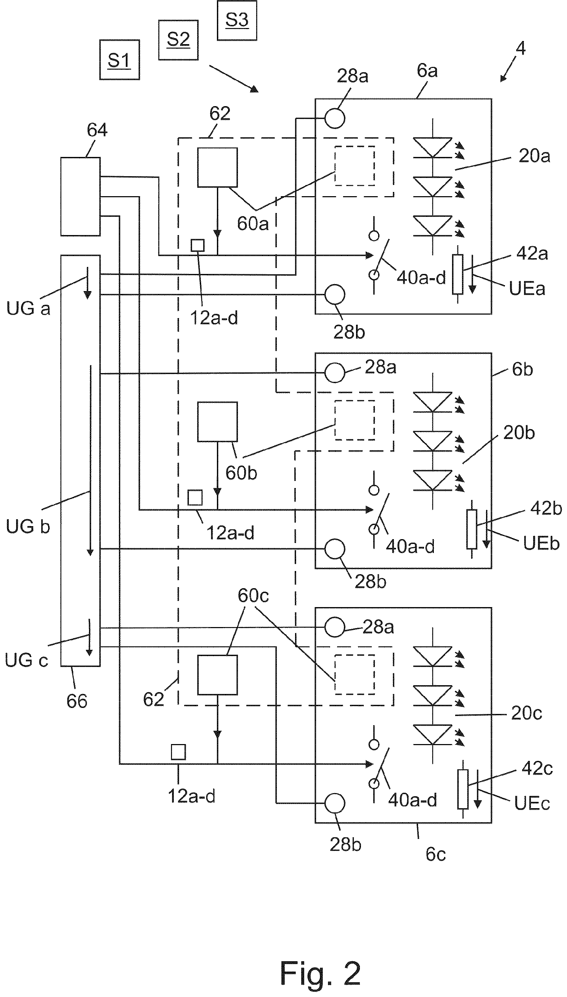

Figur 2 zeigt ein alternatives Lichtgerät 4 mit insgesamt drei Lichtquellen 6a-c, welche allesamt gemäß Figur 1 ausgeführt sind. Die jeweiligen LED-Ketten 20a-c emittieren im Betrieb jedoch Licht unterschiedlicher Farben. So ist die LED-Kette 20a mit rot leuchtenden, die LED-Kette 20b mit grün leuchtenden und die LED-Kette 20c mit blau leuchtenden LEDs 24 bestückt.

Das Lichtgerät 4 enthält hier eine Gesamtsteuerung 62 des gesamten Lichtgerätes 4, welche gemeinsam für die Ansteuerung aller drei Lichtquellen 6a-c zuständig ist. Die jeweiligen Steuereinheiten 60a-c der jeweiligen Stromsenken 22a-c sind dabei als Teile der Gesamtsteuerung 62 ausgeführt. Mit anderen Worten enthalten die einzelnen Lichtquellen 6 keine eigenen dedizierten Steuereinheiten 60, sondern diese entarten zu entsprechenden Steueranschlüssen bzw. Steuerverbindungen bzw. Signalpfaden zur Gesamtsteuerung 62 und in dieser implementierten Teilsteuerfunktionen für die jeweilige Lichtquelle 6a-c. Ebenso enthält das Lichtgerät 4 ein zentrales PWM-Element 64, welches die Aufgabe der jeweiligen PWM-Steuergeräte 10 in den Lichtquellen 6a-c übernimmt.

Durch das PWM-Element 64 erfolgt - wie sinngemäß oben erläutert - eine Gesamtansteuerung aller Lichtquellen 6a-c bzw. von deren jeweiligen Schaltern 40a-d.

Das Lichtgerät 4 enthält außerdem ein Versorgungsmodul 66 welches im bereits erläuterten Sinne ebenfalls sinngemäß jeweilige einzelne Energiequellen 8 für die Lichtquellen 6a-c ersetzt und gemeinsam sämtliche Dauergleichspannungen UGa-c der Lichtquellen 6a-c bzw. Stromsenken 22a-c erzeugt.

Das Versorgungsmodul 66 ist dabei auch dazu eingerichtet, die Größe der Dauergleichspannung UGa-c für die jeweilige Lichtquelle 6a-c in Abhängigkeit der Größe der Messspannung UM in der jeweiligen Lichtquelle 6a-c zu wählen oder zu ändern. Insbesondere wird die Dauergleichspannung UGa-c dabei jeweils so weit abgesenkt, dass beim gewünschten Gesamtstrom IGa-c die Elementspannung UE möglichst gering oder Null wird, um die Verlustleistung in der jeweiligen Lichtquelle 6a-c bzw. Stromsenke 22a-c auf ein Minimum zu reduzieren.

Bei Herstellen der Lichtquellen 6a-c wird die jeweilige LED-Kette 20a-c bereitgestellt. Die Lastwiderstände 44a-d werden dann abhängig von einer elektrischen Eigenschaft der LED-Kette 20a-c gewählt, hier der jeweiligen Summe der Vorwärtsspannungen der LEDs 24. Die jeweilige Stromsenke 22a-c wird individuell mit diesen Lastwiderständen 44a-d bereitgestellt. Die bereitgestellte LED-Kette 20a-c wird an den Anschluss 32a-c der bereitgestellten Stromsenke 6a-c angeschlossen. Damit sind die Lastwiderstände 44a-d (deren Größen) individuell an die jeweilige LED-Kette 20a-c angepasst. In jeder Stromsenke 22a-c können daher unterschiedliche Werte von Lastwiderständen 44a-d vorgesehen sein.

Dabei werden vorliegend eine Auswahl von drei Sätzen S1-3 von Lastwiderständen 44a-d bereitgestellt, die sich in ihren Widerstandswerten von Satz S1 zu Satz S2 und Satz S3 unterscheiden. Diese Sätze sind unterschiedlichen Spannungs- / Binning-Typen von LED-Ketten 20 zugeordnet. Jeder der Sätze S1-3 enthält alle Lastwiderstände 44a-d für eine jeweilige Stromsenke 22a-c. Die Lastwiderstände 44a-d einer bestimmten Stromquelle 22a-c werden nun dadurch gewählt, dass einer der Sätze S1-3 für die jeweiligen individuelle Stromsenke 22a-c ausgewählt wird und die Stromsenke 22a-c mit diesem Satz bestückt wird. Die Auswahl erfolgt dabei so, dass der Satz S1-3 gewählt wird, der am besten zur aktuell für die Stromsenkte 22a-c bereitgestellten LED-Kette 20 passt.

### Bezugszeichenliste

- 2: Flugzeug
- 4: Lichtgerät
- 6: Lichtquelle
- 8: Energiequelle
- 10: PWM-Steuergerät
- 12a-d: PWM-Signal
- 20: LED-Kette
- 22: Stromsenke
- 24: LED
- 26a,b: Kontakt (LED-Kette)
- 28a,b: oberer, unterer Versorgungspol
- 30: Strompfad
- 32: Anschluss
- 34a,b: Anschlusspole (Anschluss)
- 36: Messwiderstand
- 38: Shuntwiderstand
- 40a-d: Schalter
- 42: Widerstandselement
- 44a-d: Lastwiderstand
- 46a-d: Lastpfad
- 48a-d: Teilmesswiderstand
- 60: Steuereinheit
- 62: Gesamtsteuerung
- 64: PWM-Element
- 66: Versorgungsmodul

- B: Betrieb
- UG: Dauergleichspannung
- GND: Erdpotential
- VCC: Betriebspotential
- IG: Gesamtstrom
- UM: Messspannung
- UE: Elementspannung
- ILa-d: Laststrom
- S1-3: Satz

## Patentansprüche

1. Stromsenke (22) für eine LED-Kette (20),
- mit einem oberen (28a) und einem unteren Versorgungspol (28b), die in einem bestimmungsgemäßen Betrieb (B) von einer Dauergleichspannung (UG) gespeist sind,
- mit einem einzigen Strompfad (30), der die beiden Versorgungspole (28a,b) verbindet, und der im Betrieb (B) von einem Gesamtstrom (IG) durchflossen ist,
- wobei in Reihenschaltung in dem Strompfad (30) angeordnet sind:
- ein zweipoliger Anschluss (32) für die LED-Kette (20), und
- ein steuerbares Widerstandselement (42), das eine Parallelschaltung aus wenigstens zwei Lastpfaden (46a-d) enthält, wobei jeder der Lastpfade (46a-d) eine Reihenschaltung aus einem Lastwiderstand (44a-d) und einem Schalter (40a-d) zum Öffnen oder Schließen des jeweiligen Lastpfades (46a-d) enthält,
- und mit einem Messwiderstand (36) durch den der aktuell den Strompfad (30) durchfließende Gesamtstrom (IG) auf eine aktuelle Messspannung (UM) abgebildet ist,
- mit einer an allen Schaltern (40a-d) angeschlossenen Steuereinheit (60), die dazu eingerichtet ist, in Abhängigkeit der Messspannung (UM) die Schalter (40a-d) so anzusteuern, dass sich ein vorgebbarer Gesamtstrom (IG) und eine vorgebbare über dem Widerstandselement (42) abfallende Elementspannung (UE) im Strompfad (30) einstellt.

2. Stromsenke (22) nach Anspruch 1,
**dadurch gekennzeichnet, dass**
in Bezug auf die Lastpfade (46a-d) die Größen der Lastwiderstände (44a-d) gemäß einer Binärfolge zueinander gewählt sind.

3. Stromsenke (22) nach einem der vorhergehenden Ansprüche
**dadurch gekennzeichnet, dass**
der Messwiderstand (36) ein Shuntwiderstand (38) ist, der ein zusätzliches Element der Reihenschaltung der Stromsenke (22) ist.

4. Stromsenke (22) nach Anspruch 3,
**dadurch gekennzeichnet, dass**
der Shuntwiderstand (38) in dem Strompfad (30) als erstes Element an dem unteren Versorgungspol (28b) angeordnet ist.

5. Stromsenke (22) nach einem der Ansprüche 1 bis 2,
**dadurch gekennzeichnet, dass**
der Messwiderstand (36) durch je einen Teilmesswiderstand (48a-d) pro Lastpfad (46a-d) gebildet ist, wobei jeder der Teilmesswiderstände (48a-d) zumindest ein Teil des jeweiligen Lastwiderstandes (44a-d) ist.

6. Stromsenke (22) nach einem der vorhergehenden Ansprüche,
**dadurch gekennzeichnet, dass**
innerhalb wenigstens eines der Lastpfade (46a-d) der Schalter (40a-d) als erstes Element der Reihenschaltung dem unteren Versorgungspol (28b) zugewandt angeordnet ist.

7. Stromsenke (22) nach einem der vorhergehenden Ansprüche,
**dadurch gekennzeichnet, dass**
der Anschluss (32) für die LED-Kette (20) in dem Strompfad (30) als erstes Element der Reihenschaltung an dem oberen Versorgungspol (28a) angeordnet ist.

8. Stromsenke (22) nach einem der vorhergehenden Ansprüche,
**dadurch gekennzeichnet, dass**
jeder der Schalter (40a-d) ein PWM-Schalter für einen PWM-Betrieb der LED-Kette (20) ist.

9. Lichtquelle (6) für ein Lichtgerät (4) eines Flugzeuges (2),
- mit der Stromsenke (22) nach einem der vorhergehenden Ansprüche,
- mit der LED-Kette (20) mit einer Mehrzahl von in Reihe geschalteten LEDs (24), die an dem Anschluss (32) angeschlossen ist.

10. Lichtgerät (4) für ein Flugzeug (2),
mit mindestens einer Lichtquelle (6a-c) nach Anspruch 9.

11. Lichtgerät (4) nach Anspruch 10,
**dadurch gekennzeichnet, dass**
- das Lichtgerät (4) ein Versorgungsmodul (66) zur Versorgung der Versorgungspole (28a-b) wenigstens einer der Lichtquellen (6a-c) mit einer jeweiligen Dauergleichspannung (UGa-c) enthält.

12. Lichtgerät (4) nach Anspruch 11,
**dadurch gekennzeichnet, dass**
das Versorgungsmodul (66) dazu eingerichtet ist, die Größe der Dauergleichspannung (UGa-c) für wenigstens eine der Lichtquellen (6a-c) in Abhängigkeit der Größe der über dem Widerstandselement (42a-c) abfallenden Elementspannung (UE) in der jeweiligen Lichtquelle (6a-c) zu wählen oder zu ändern.

13. Verfahren zum Herstellen einer Lichtquelle (6a-c) nach Anspruch 9, bei dem:
- die LED-Kette (20a-c) bereitgestellt wird,
- wenigstens einer der Lastwiderstände (44a-d) abhängig von einer elektrischen Eigenschaft der LED-Kette (20a-c) gewählt wird und die Stromsenke (22a-c) mit diesen Lastwiderständen (44a-d) bereitgestell wird,
- die bereitgestellte LED-Kette (20a-c) an den Anschluss (32a-c) der bereitgestellten Stromsenke (6a-c) angeschlossen wird

14. Verfahren nach Anspruch 13,
**dadurch gekennzeichnet, dass**
- eine Auswahl von wenigstens zwei Sätzen von Lastwiderständen (44a-d) bereitgestellt wird, wobei jeder der Sätze wenigsten einen Teil der Lastwiderstände (44a-d) wenigstens einer der Stromsenken (22a-c) darstellt,
- wenigstens einer der Lastwiderstände (44a-d) dadurch gewählt, dass einer der Sätze für die Stromsenke (22a-c) ausgewählt wird und die Stromsenke (22a-c) mit diesem Satz bestückt wird.
